# EUROPEAN PATENT APPLICATION

(11) **EP 4 778 663 A1**
(43) Date of publication of application: **22.07.2026**
(21) Application number: 26150828.7
(22) Date of filing: 08.01.2026
(51) Int. Cl.: B23K 26/064, B23K 26/14, B23K 26/38, B23K 26/16, B23K 26/08

(54) **LASER MACHINING APPARATUS INCL. A MIST NOZZLE**

(30) Priority: 16.01.2025 JP 2025006076; 08.12.2025 JP 2025239626
(71) Applicant: Sugino Machine Limited, Namerikawa City, Toyama 936-8577 (JP)
(72) Inventor: KANEMITSU, Masanori, Namerikawa City, Toyama, 9368577 (JP); IGARASHI, Atsuya, Namerikawa City, Toyama, 9368577 (JP); SUGIMORI, Tadashi, Namerikawa City, Toyama, 9368577 (JP)
(74) Representative: Global IP Europe Patentanwaltskanzlei

(57) **Abstract**

Fine particles generated from a machined workpiece is suppressed from adhering to the workpiece. A laser machining apparatus (10) for machining a workpiece (3) includes a laser head (11) including a liquid supply chamber (16) configured to store a liquid, a liquid nozzle (17) disposed to face the liquid supply chamber (16) and having an orifice (17b) configured to generate a liquid column (41), an optical lens (14) configured to focus a laser beam onto the orifice (17b), and a liquid-column outlet (22) through which the liquid column (41) passes. The laser machining apparatus (10) further includes a mist nozzle (37) disposed at a distal end of the laser head (11) and configured to spray mist (55) toward the workpiece (3).

## Description

### BACKGROUND

### 1. Technical Field

The present invention relates to a laser machining apparatus.

### 2. Description of the Background

A machining method is known in which a machine head ejects a liquid jet, a laser beam is guided within the liquid jet, and a protective shield blank having no preformed hole is fixed to the machine head. In this method, a through-hole is first machined in the protective shield blank by using the laser guided in the liquid jet, and thereafter a workpiece is machined by using the laser guided in the liquid jet that passes through the machined through-hole (see Japanese Patent No. 5579733, hereinafter referred to as "Patent Literature 1").

### BRIEF SUMMARY

Fine particles generated from a machined workpiece may adhere to the workpiece or to the laser head (machine head).

An aspect of the present invention is to provide a laser machining apparatus capable of suppressing fine particles generated from a machined workpiece from adhering to the workpiece or the laser head.

A first aspect of the present invention provides a laser machining apparatus for machining a workpiece, the laser machining apparatus including:
a laser head including:
   a liquid supply chamber configured to store a liquid,
   a liquid nozzle disposed to face the liquid supply chamber, the liquid nozzle having an orifice configured to generate a liquid column,
   an optical lens configured to focus a laser beam onto the orifice, and
   a liquid-column outlet configured to allow the liquid column to pass; and
a mist nozzle disposed on a distal side of the laser head, the mist nozzle configured to spray mist toward the workpiece.

The angles between the mist nozzle and the liquid column may be different from each other. For example, a first mist nozzle disposed on a first side of the liquid column and a second mist nozzle disposed on a second side of the liquid column may be provided. An angle between the first mist nozzle and the liquid column is referred to as a first angle. An angle between the second mist nozzle and the liquid column is referred to as a second angle. The first angle and the second angle may be different from each other.

When a spray axis of the mist nozzle does not intersect the liquid column, a point at which the spray axis and the liquid column approach one another most closely may be located, as viewed from the machining head, on a rear side of the workpiece relative to a surface of the workpiece.

In some embodiments, the mist nozzle may be disposed toward a distal side of the laser head.

The nozzle may include an orifice facing the liquid supply chamber and a liquid-column forming chamber connected to the orifice and through which the liquid column generated from the orifice passes.

The laser machining apparatus may further include:
an outlet tube inserted into the interior of the liquid-column forming chamber and through which the liquid column passes;
a liquid-column outlet connected to the outlet tube; and
a gas introduction passage connected to an outer side of the outlet tube inside the liquid-column forming chamber.

The laser machining apparatus may further include a laser oscillator configured to generate a laser beam. The liquid-column outlet may have an inner diameter equal to that of the outlet tube.

The gas introduction passage may include:
an annular distribution chamber disposed radially outward of the nozzle;
an annular collection chamber connected to the liquid-column forming chamber; and
a plurality of connection passages connecting the distribution chamber and the collection chamber.

The plurality of connection passages may be arranged rotationally symmetrically with respect to a central axis of the orifice. Each connection passage may extend along a straight line passing through the central axis of the orifice.

The liquid-column forming chamber may have a conical shape. The liquid-column forming chamber may be centered on the central axis of the orifice. The liquid-column forming chamber may increase in diameter as the distance from the orifice increases.

The liquid-column forming chamber may include a right cylindrical portion centered on the central axis of the orifice, and the collection chamber may be connected to the right cylindrical portion. The liquid-column forming chamber may include a conical portion disposed on a side of the cylindrical portion closer to the orifice and connected to the right cylindrical portion.

The laser head may include a recess located at a distal end thereof and having a liquid-column outlet configured to discharge the liquid column. The recess may include a bottom surface. The liquid-column outlet is disposed on the bottom surface. The bottom surface may be a plane perpendicular to a central axis of the orifice. The recess may increase in diameter toward a distal side of the laser head. The recess may have the shape of a truncated cone.

The laser machining apparatus according to the present invention suppresses fine particles generated from a machined workpiece from adhering to the workpiece.

### BRIEF DESCRIPTION OF THE DRAWINGS

FIG. 1 is a longitudinal sectional view of a laser machining apparatus according to a first embodiment.
FIG. 2 is an enlarged view of region II in FIG. 1.
FIG. 3 is a sectional view taken along line III-III in FIG. 2.
FIG. 4 is a sectional view taken along line IV-IV in FIG. 2.
FIG. 5 is a sectional view taken along line V-V in FIG. 1.
FIG. 6 is a sectional view of a mist nozzle according to the first embodiment.
FIG. 7 is a longitudinal sectional view of the laser machining apparatus according to the first embodiment in use.
FIG. 8 is a longitudinal sectional view of the laser machining apparatus according to the first embodiment in use.
FIG. 9 is a longitudinal sectional view of a laser machining apparatus according to a second embodiment.
FIG. 10 is a sectional view taken along line X-X in FIG. 9.
FIG. 11 is a longitudinal sectional view of a laser machining apparatus according to a third embodiment.
FIG. 12 is a sectional view taken along line XII-XII in FIG. 11.
FIG. 13 is a modified example of FIG. 12.

### DETAILED DESCRIPTION

### First Embodiment

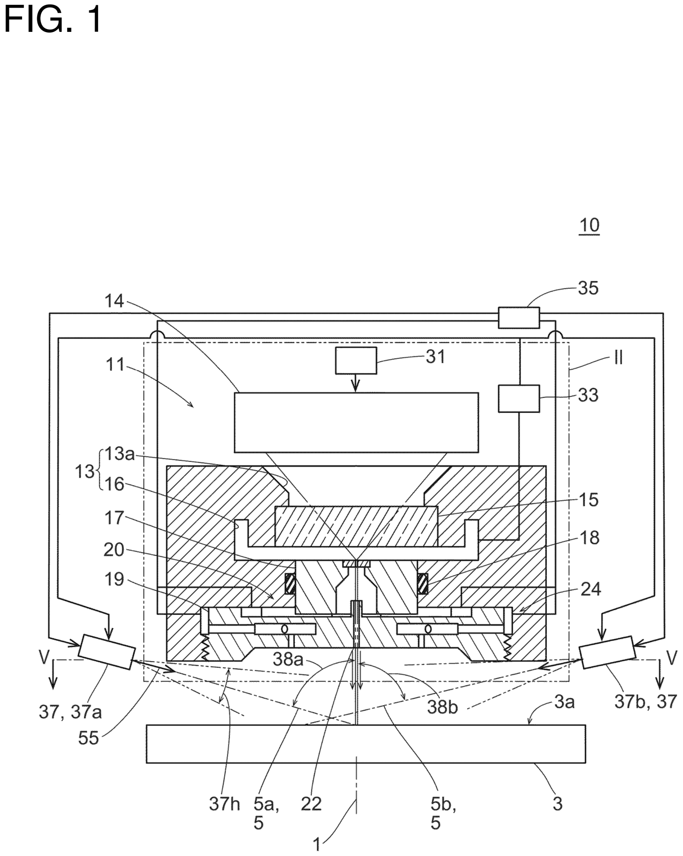

As shown in FIG. 1, a laser machining apparatus 10 according to the present embodiment includes a laser oscillator 31, a liquid supply source 33, a gas source 35, a laser head 11, and a mist nozzle 37. The laser head 11 includes a head body 13, an optical lens 14, a window 15, a nozzle (liquid nozzle) 17, a packing 18, and a cap 19. The laser head 11 has a liquid-column outlet 22. In the present description, the side of the laser head 11 toward which the liquid-column outlet 22 is directed along the central axis 1 is referred to as a distal end, and the opposite side along the central axis 1 is referred to as a proximal end.

The laser oscillator 31 emits a laser beam, preferably a pulsed laser.

The liquid supply source 33 may include a high-pressure pump and a low-pressure pump. The high-pressure pump may be, for example, a piston pump. The liquid supply source 33 serves as a liquid pump. The liquid supply source 33 pressurizes the liquid to 10 MPa to several tens of MPa. The liquid may be water, for example. The gas source 35 may be an air compressor or a gas cylinder. The gas source 35 supplies compressed air or helium gas to the laser head.

The laser oscillator 31, the liquid supply source 33, and the gas source 35 may be disposed outside the laser machining apparatus 10.

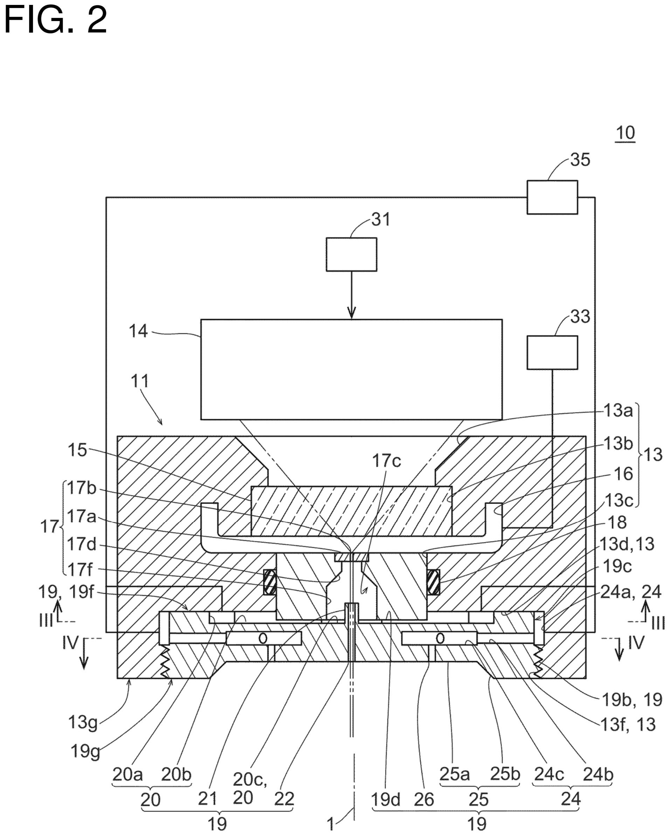

As shown in FIG. 2, the head body 13 has a columnar shape. The head body 13 includes, in order from the proximal side, a laser passage 13a, a window chamber 13b, a liquid supply chamber 16, a nozzle chamber 13c, a cap chamber 13d, and an end surface 13g. The laser passage 13a, the window chamber 13b, the liquid supply chamber 16, the nozzle chamber 13c, and the cap chamber 13d are arranged along the central axis 1. The laser passage 13a has the shape of a truncated right circular cone. The window chamber 13b and the nozzle chamber 13c each have a right cylindrical shape. The nozzle chamber 13c may include a packing groove (not shown). The liquid supply chamber 16, which has a U-shaped cross-section, forms a rotational body centered on the central axis 1. The cap chamber 13d has a right cylindrical shape. The cap chamber 13d includes a female thread 13f. The female thread 13f is provided at a distal portion of the cap chamber 13d.

The nozzle 17 is disposed within the nozzle chamber 13c. The nozzle 17 includes a nozzle tip 17a and a liquid-column forming chamber 17c. The nozzle tip 17a is, for example, a gemstone. Hereinafter, the term gemstone includes synthetic gemstones and sintered bodies of synthetic gemstones. The nozzle tip 17a has an orifice 17b. The orifice 17b extends along the central axis 1. The liquid-column forming chamber 17c is arranged along the central axis 1. The liquid-column forming chamber 17c may include a cylindrical portion 17f and a conical portion 17d. The cylindrical portion 17f is disposed at the distal end of the nozzle 17. The cylindrical portion 17f has a right cylindrical shape. The conical portion 17d is connected to the cylindrical portion 17f. The conical portion 17d is disposed on the proximal side of the cylindrical portion 17f. The conical portion 17d may have a right conical shape. The conical portion 17d decreases in diameter toward the orifice 17b.

The cylindrical portion 17f may be omitted. In that case, the conical portion 17d extends to the distal end of the nozzle 17.

The packing 18 is placed within a packing groove (not shown). The packing 18 seals between the head body 13 and the nozzle 17.

The window 15 is disposed within the window chamber 13b. The window 15 has a right cylindrical shape. The window 15 is, for example, a gemstone plate. The laser beam passes through the window 15. The laser beam is focused at the orifice 17b by the optical lens 14. The optical lens 14 may include a plurality of lenses.

The cap 19 is fastened to the cap chamber 13d. The cap 19 has a right cylindrical shape. The cap 19 retains the nozzle 17. The cap 19 includes a first surface 19f, a second surface 19g, an outer cylindrical surface 19c, a male thread 19b, a nozzle chamber 19d, a first gas introduction passage 20, an outlet tube 21, a liquid-column outlet 22, a second gas introduction passage 24, a recess 25, and a gas outlet port 26.

The second gas introduction passage 24 and the gas outlet port 26 may be omitted.

The first surface 19f and the second surface 19g are planar. The first surface 19f and the second surface 19g constitute end faces of the cap 19. The first surface 19f abuts the bottom surface of the cap chamber 13d. The second surface 19g is substantially coplanar with the end surface 13g. The phrase substantially coplanar includes cases where the distance between the surfaces is 0.5 mm or less.

The outer cylindrical surface 19c, which is a cylindrical surface, has a smaller diameter than the male thread 19b. The outer cylindrical surface 19c is located on the proximal-side portion of the side surface of the cap 19. A clearance is provided radially outward of the outer cylindrical surface 19c. The height of the outer cylindrical surface 19c is approximately 50% of the distance between the first surface 19f and the second surface 19g. The male thread 19b is located at the distal end of the cap 19. The male thread 19b engages with the female thread 13f.

The recess 25 is located on the second surface 19g. The recess 25 has the shape of a truncated right circular cone centered on the central axis 1. The recess 25 includes a bottom surface 25a and a side surface 25b. The bottom surface 25a is a plane perpendicular to the central axis 1. The side surface 25b is a conical surface centered on the central axis 1. The side surface 25b decreases in diameter toward the first surface 19f.

The nozzle chamber 19d opens to the first surface 19f. The nozzle chamber 19d has a right cylindrical shape centered on the central axis 1. A distal portion of the nozzle 17 is housed within the nozzle chamber 19d. A bottom surface of the nozzle chamber 19d abuts a bottom surface of the nozzle 17. An inner cylindrical surface of the nozzle chamber 19d abuts an outer cylindrical surface of the nozzle 17.

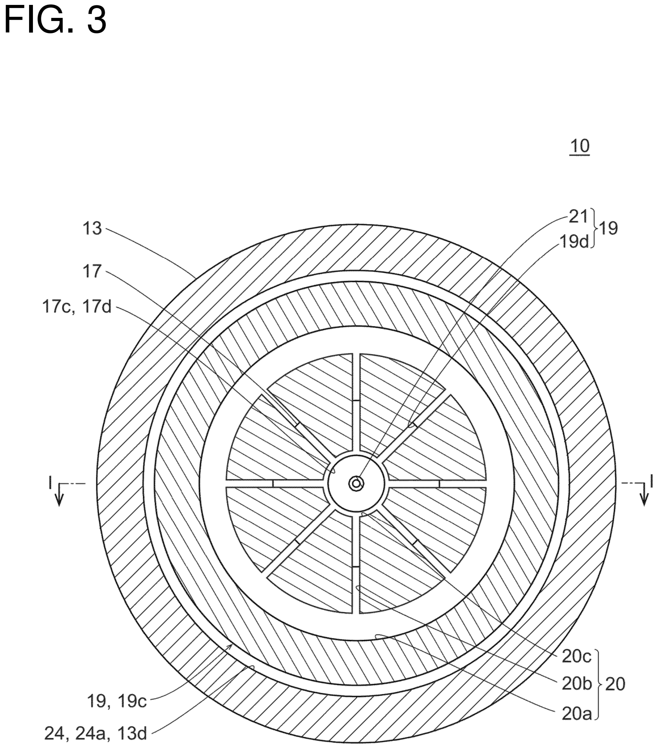

As shown in FIGS. 2 and 3, the first gas introduction passage 20 includes a first distribution chamber 20a, a plurality of first connection passages 20b, and a collection chamber (gas supply chamber) 20c. The first gas introduction passage 20 is located on the first surface 19f. The first gas introduction passage 20 may open to the first surface 19f.

The first distribution chamber 20a is a hollow circular plate. The collection chamber 20c is a hollow circular plate. An outer diameter of the collection chamber 20c is smaller than an inner diameter of the first distribution chamber 20a. The collection chamber 20c is located radially inward of the first distribution chamber 20a. A depth of the collection chamber 20c from the first surface 19f may be the same as a depth of the first distribution chamber 20a from the first surface 19f.

Each first connection passage 20b connects the first distribution chamber 20a and the collection chamber 20c. The first connection passage 20b extends radially from the collection chamber 20c. A cross-section of the first connection passage 20b may be, for example, rectangular. A depth of the first connection passage 20b from the first surface 19f may be the same as a depth of the first distribution chamber 20a from the first surface 19f. The first connection passage 20b may be rotationally symmetric about the central axis 1. As shown in FIG. 3, in the present embodiment, the first connection passages 20b are eight-fold rotationally symmetric about the central axis 1.

Alternatively, the first connection passage 20b may be provided in the nozzle 17. In such a case, the collection chamber 20c may be integral with the cylindrical portion 17f.

The outlet tube 21 and the liquid-column outlet 22 are located on the central axis 1. The outlet tube 21 is a hollow cylinder. The outlet tube 21 extends from an upper surface of the collection chamber 20c toward the nozzle 17. The outlet tube 21 is disposed inside the liquid-column forming chamber 17c. The outlet tube 21 protrudes toward the proximal side beyond a proximal edge of the collection chamber 20c. The liquid-column outlet 22 is located on the bottom surface 25a. The liquid-column outlet 22, which is a cylindrical hole, communicates with an inner surface of the outlet tube 21. An inner diameter of the liquid-column outlet 22 is equal to an inner diameter of the outlet tube 21.

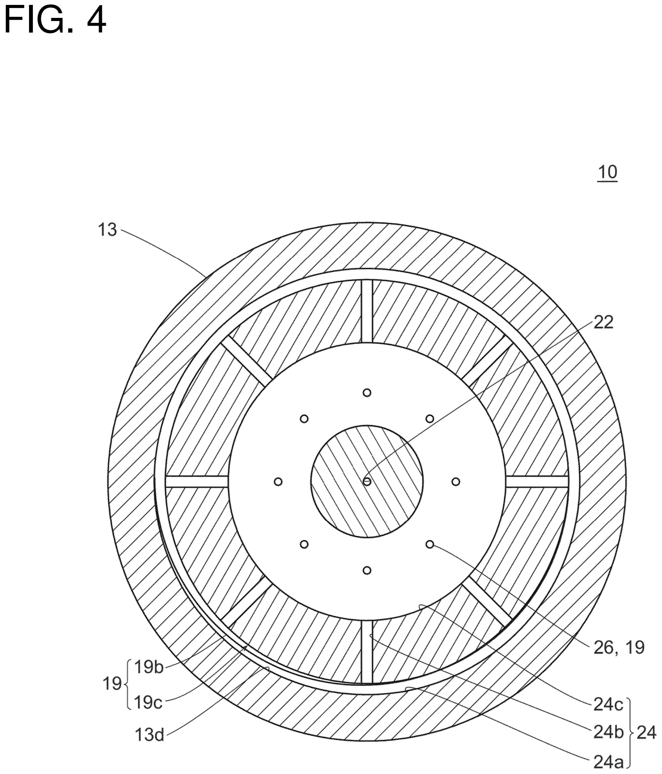

As shown in FIGS. 2 and 4, the second gas introduction passage 24 includes a second distribution chamber 24a, a plurality of second connection passages 24b, and a gas supply chamber 24c. The second gas introduction passage 24 is located on a distal side relative to the first gas introduction passage 20. For example, the second distribution chamber 24a is defined between the outer cylindrical surface 19c and the cap chamber 13d. The second distribution chamber 24a has a thin-walled cylindrical shape. The second distribution chamber 24a is located radially outward of the first distribution chamber 20a. The gas supply chamber 24c is a hollow circular plate. The gas supply chamber 24c is located on a distal side relative to the collection chamber 20c. Each second connection passage 24b connects the second distribution chamber 24a and the gas supply chamber 24c. The second connection passages 24b are arranged on a distal side relative to the first connection passages 20b. Each second connection passage 24b extends, for example, along a straight line passing through the central axis 1. The second connection passages 24b may be rotationally symmetric about the central axis 1. As shown in FIG. 4, in the present embodiment, the second connection passages 24b are eight-fold rotationally symmetric about the central axis 1.

As shown in FIG. 2, a plurality of gas outlet ports 26 extend from the gas supply chamber 24c toward the bottom surface 25a. Each gas outlet port 26 extends parallel to the central axis 1. As shown in FIG. 4, the gas outlet ports 26 are cylindrical holes. The gas outlet ports 26 may be small-diameter holes. A diameter of each gas outlet port 26 may be 1 mm or less; for example, 0.4 mm to 0.8 mm. The gas outlet ports 26 are arranged rotationally symmetrically about the central axis 1. As shown in FIG. 4, in the present embodiment, the gas outlet ports 26 are eight-fold rotationally symmetric about the central axis 1. The gas outlet ports 26 may be positioned at a central part of a radial width of the gas supply chamber 24c.

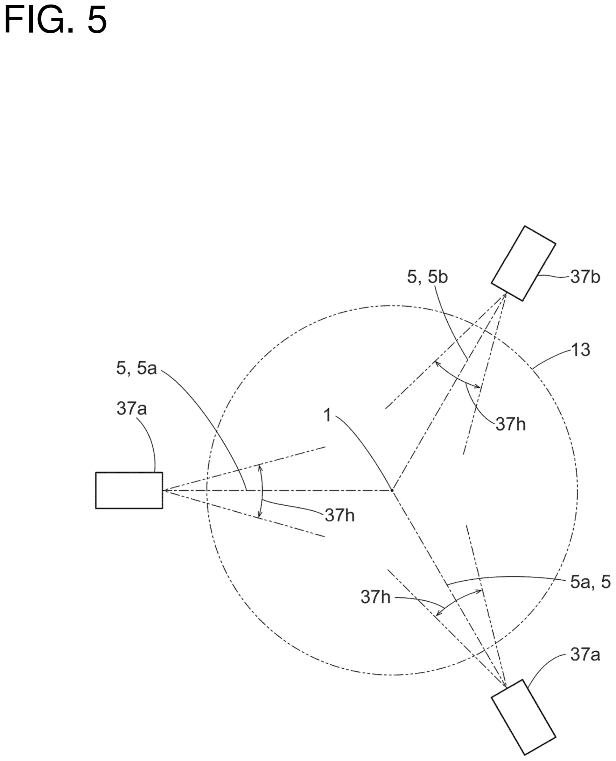

As shown in FIGS. 1 and 5, the laser machining apparatus 10 may include a plurality (three in the present embodiment) of mist nozzles 37. Each mist nozzle 37 sprays mist 55 so as to spread in a substantially circular conical shape about a spray axis 5. Alternatively, each mist nozzle 37 may spray mist 55 so as to spread over a planar region. Preferably, the mist nozzles 37 are arranged asymmetrically with respect to the central axis 1. In the present embodiment, two first mist nozzles 37a and one second mist nozzle 37b are provided.

The first mist nozzle 37a is arranged on a first side of the central axis 1 (lower left in FIG. 5). The second mist nozzle 37b is arranged on a second side of the central axis 1 (upper right in FIG. 5). The first mist nozzle 37a and the second mist nozzle 37b have the same structure. As shown in FIG. 5, a spray axis 5a of the first mist nozzle 37a intersects the central axis 1. A spray axis 5b of the second mist nozzle 37b also intersects the central axis 1. In the circumferential direction, the first mist nozzle 37a and the second mist nozzle 37b are arranged evenly. As shown in FIG. 1, the mist nozzles 37a and 37b spray mist 55 toward the machining point on the workpiece 3. The machining point is an intersection between the liquid column 41 and the workpiece 3. However, an angle 38a between the central axis 1 and the spray axis 5a is smaller than an angle 38b between the central axis 1 and the spray axis 5b. A spray angle 37h of each mist nozzle 37 is, for example, 10° to 20°. The spray angle 37h represents an angle at which the mist 55 is discharged. The mist nozzles 37 spray the mist 55 continuously over time.

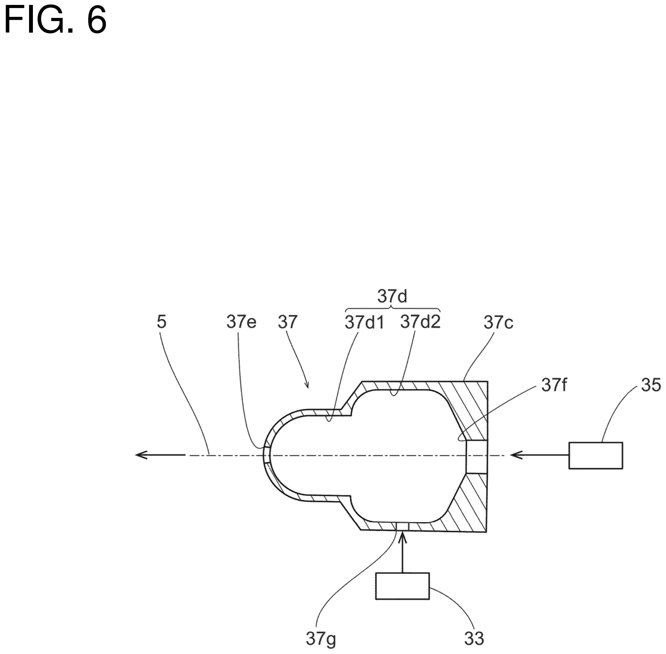

As shown in FIG. 6, the mist nozzle 37 includes a body 37c, a mixing chamber 37d, a mist outlet 37e, a gas outlet 37f, and a liquid inlet 37g. The body 37c has a columnar shape. The mist outlet 37e, which is located at a distal end of the mist nozzle 37, extends along the spray axis 5.

The mixing chamber 37d is located inside the body 37c. The mixing chamber 37d has a snowman-like shape. The mixing chamber 37d includes a small-diameter portion 37d1 and a large-diameter portion 37d2. The small-diameter portion 37d1 is located at a distal end of the mist nozzle 37. The large-diameter portion 37d2 is located at a proximal end of the mist nozzle 37. The mist outlet 37e, which is located on the spray axis 5, is connected to the small-diameter portion 37d1. The mist outlet 37e sprays the mist 55 in a substantially circular conical pattern or in a planar spreading pattern. The gas outlet 37f, which is located at a proximal end of the mist nozzle 37, extends along the spray axis 5. The gas outlet 37f is connected to the large-diameter portion 37d2. The gas outlet 37f is connected to the gas source 35. The gas outlet 37f injects gas into the mixing chamber 37d. The gas may be compressed air, for example. The liquid inlet 37g is connected to the large-diameter portion 37d2. The liquid inlet 37g is located laterally on the body 37c when viewed from the spray axis 5. The liquid inlet 37g is oriented in a direction perpendicular to the spray axis 5. Liquid introduced through the liquid inlet 37g mixes with gas injected into the mixing chamber 37d, forming droplets that are sprayed from the mist outlet 37e.

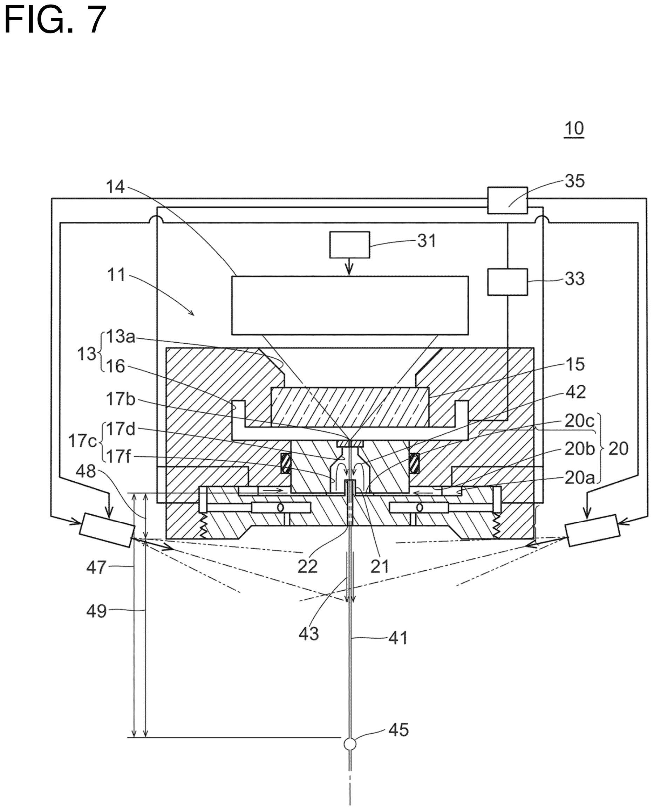

As shown in FIG. 7, when the liquid supply source 33 supplies liquid to the laser head 11, a liquid column 41 is formed from the orifice 17b through the liquid supply chamber 16. The liquid column 41 is discharged from the laser head 11 through the liquid-column forming chamber 17c, the outlet tube 21, and the liquid-column outlet 22. The laser oscillator 31 emits a laser beam. The optical lens 14 focuses the laser beam at the orifice 17b via the window 15. Accordingly, the laser beam propagates through the interior of the liquid column 41.

When the gas source 35 supplies gas to the first gas introduction passage 20, the gas is evenly distributed within the first distribution chamber 20a. The gas flows almost uniformly into the collection chamber 20c through the plurality of first connection passages 20b. The gas then flows from the collection chamber 20c into the liquid-column forming chamber 17c. Within the liquid-column forming chamber 17c, the gas forms a swirling flow 42. The gas flows along a peripheral portion of the cylindrical portion 17f toward the orifice 17b. In the conical portion 17d near the orifice 17b, the gas changes direction toward the central axis 1. The gas then swirls toward the distal direction along the liquid column 41, passes through a central region of the liquid-column forming chamber 17c, and enters the interior of the outlet tube 21. The gas is discharged from the liquid-column outlet 22.

From the vicinity of the orifice 17b in the liquid-column forming chamber 17c, the gas flows so as to envelop the outer periphery of the liquid column 41. The liquid column 41 is surrounded by the swirling flow 42 and flows together with the gas flow inside the liquid-column forming chamber 17c. In the region from the proximal end of the outlet tube 21 to the liquid-column outlet 22, the gas continues to flow so as to envelop the liquid column 41. The gas flow 43 discharged from the liquid-column outlet 22 also flows together with the liquid column 41 so as to envelope an outer periphery of the liquid column 41. The swirling flow 42 and the gas flow 43 flow at higher speeds than the liquid column 41. Gas has a lower viscosity than liquid. Because the gas flows so as to envelop the periphery of the liquid column 41, the velocity of the gas flowing around the liquid column 41 becomes higher than the surface velocity of the liquid column 41. Accordingly, the swirling flow 42 and the gas flow 43 reduce vorticity at the interface between the surface of the liquid column 41 and the surrounding gas. The swirling flow 42 and the gas flow 43 thereby promote stabilization and laminarization of the liquid column 41.

The outlet tube 21 extends along the central axis 1 within the liquid-column forming chamber 17c. The collection chamber 20c is connected to a lower portion of the liquid-column forming chamber 17c. Accordingly, gas flows from a peripheral region of the liquid-column forming chamber 17c toward the orifice 17b, swirls near the orifice 17b, and flows along the liquid column 41. As the swirling flow 42 is generated within the liquid-column forming chamber 17c, a tubular flow of gas forms around the liquid column 41 discharged from the orifice 17b. This suppresses tilting or disturbance of the liquid column 41 within the liquid-column forming chamber 17c. The liquid-column forming chamber 17c includes the cylindrical portion 17f located at the distal end and the conical portion 17d located at the proximal end. This configuration promotes the formation of the swirling flow 42.

The flow of the liquid column 41 begins to destabilize as it becomes distant from the nozzle 17. At a location 45 where the outer surface of the liquid column 41 becomes disturbed, the laser leaks out of the liquid column 41. According to the laser machining apparatus 10, effective cutting can be performed between the end surface 13g and the location 45. The distance from the end surface 13g to the location 45 is referred to as the effective cutting length 49. In the present embodiment, the first gas introduction passage 20 is located near the distal end surface of the nozzle 17. The first gas introduction passage 20 has a short length in the direction of the central axis 1. The second gas introduction passage 24 is formed as a thin disk. Therefore, the distance 48 from the distal end surface of the nozzle 17 to the end surface 13g is short. This increases the effective cutting length 49.

The inner diameter of the liquid-column outlet 22 is equal to the inner diameter of the outlet tube 21. Accordingly, the vorticity of the gas flow 43 and the liquid column 41 is suppressed between the entrance (proximal end) of the outlet tube 21 and the liquid-column outlet 22. This reduces disturbance of the liquid column 41 and increases the effective cutting length 49. This suppresses attenuation of the laser propagating inside the liquid column 41. As a result, the machining capability of the laser machining apparatus 10 is improved.

The velocity of gas flow within the mist 55 is slower than the velocity of the gas flow 43. Further, the apparent density of the mist 55 is lower than that of liquid. Thus, the influence of the mist 55 on the gas flow 43 is small. Therefore, even when the mist nozzle 37 sprays the mist 55, the effective cutting length 49 tends to remain unchanged.

The energy of the laser propagating within the liquid column 41 tends to decrease as the distance 47 from the nozzle 17 increases. Accordingly, it is desirable to position the nozzle 17 and the workpiece 3 as close as possible. As the distance 48 is short in the laser head 11, the distance between the nozzle 17 and the workpiece 3 can be reduced.

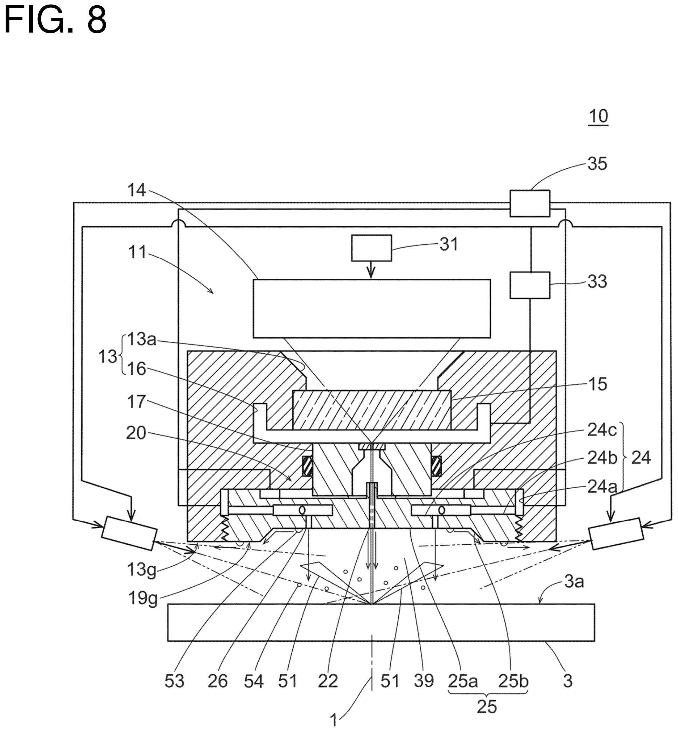

As shown in FIG. 8, the laser machining apparatus 10 according to the present embodiment machines the workpiece 3. The workpiece 3 has a surface 3a. When the liquid column 41 strikes the workpiece 3, rebound liquid 51 splashes from the surface 3a. The rebound liquid 51 adheres to the distal end surface of the laser head 11 in the form of droplets 53.

The fine particles 54 generated from the workpiece 3 float between the laser head 11 and the workpiece 3. The fine particles 54 may have adhesiveness.

In the prior art, the droplets 53 were sometimes attracted toward the liquid-column outlet 22. When droplets 53 adhered to the liquid-column outlet 22, the liquid column 41 tended to become unstable. In such cases, the energy of the laser propagating within the liquid column 41 tended to decrease. Furthermore, dross generated during machining sometimes adhered to the distal end surface of the laser head 11 together with the droplets 53. When the dross was attracted toward the liquid-column outlet 22 together with the droplets 53, the liquid-column outlet 22 could become clogged by the dross.

The fine particles 54 also adhered at times to the laser head 11 or the workpiece 3. If the fine particles 54 adhered to and accumulated at the liquid-column outlet 22, the liquid column 41 tended to become unstable. The liquid column 41 also tended to tilt.

Additionally, as the gas flow 43 surrounding the liquid column 41 generates fluid resistance, the fine particles 54 floating between the laser head 11 and the workpiece 3 tend to flow toward the workpiece 3. The fine particles 54 adhering to the surface 3a or floating near the surface 3a may, upon receiving the gas flow, become fixed to the surface 3a.

The laser machining apparatus 10 according to the present embodiment includes the mist nozzle 37. The mist 55 sprayed from the mist nozzle 37 lowers the temperature of the fine particles 54. The mist 55 also cleans the surface 3a. As the angle 38a is greater than the angle 38b, the mist 55 flows across the workpiece 3 toward the second side (upper right in FIG. 5). As the installation angles of the first mist nozzle 37a and the second mist nozzle 37b differ, the flow of mist on the surface 3a becomes unbalanced. This suppresses droplets sprayed onto the surface 3a from remaining near the machining point. Consequently, adhesion of fine particles 54 to the surface 3a is reduced.

As the mist flow on the surface 3a is unbalanced, liquid near the machining point is more effectively discharged. Accordingly, scattering of the laser caused by liquid accumulation around the machining point is suppressed. This prevents deterioration of machining performance.

Furthermore, spraying of the mist 55 from the mist nozzle 37 suppresses disturbance of the liquid column 41.

The laser machining apparatus 10 according to the present embodiment includes the gas outlet ports 26. As the gas outlet ports 26 have small diameters, the total cross-sectional area of the gas outlet ports 26 can be reduced. This reduces the flow rate of gas discharged from the gas outlet ports 26. Even with a reduced gas flow rate, the gas velocity discharged from the gas outlet ports 26 can be increased. As the gas flow rate is small, the influence of the gas discharged from the gas outlet ports 26 on the liquid column 41 is small. Thus, this reduces disturbance of the liquid column 41 due to the gas discharged from the gas outlet ports 26. The gas discharged from the gas outlet ports 26 breaks up the rebound liquid 51 and promotes its dispersion. This reduces adhesion of rebound liquid 51 to the distal end surface of the laser head 11. Increasing the gas velocity further suppresses adhesion of the rebound liquid 51.

The laser machining apparatus 10 according to the present embodiment includes the recess 25. The recess 25 has the bottom surface 25a. The gas outlet ports 26 are located in the bottom surface 25a. When gas is discharged from the gas outlet ports 26, droplets 53 adhering to the bottom surface 25a move radially outward. Most of the droplets 53 are then discharged via the side surface 25b, the second surface 19g, and the end surface 13g. As the side surface 25b is inclined outward, discharge of the droplets 53 is promoted. As the second surface 19g and the end surface 13g are substantially coplanar, discharge of the droplets 53 is further promoted. This reduces adverse effects of adhesion of the rebound liquid 51 to the laser head 11. This also suppresses clogging of the liquid-column outlet 22 by dross.

Even when no gas outlet port 26 is provided, as the side surface 25b is inclined outward, the droplets 53 readily discharge from the vicinity of the liquid-column outlet 22.

The gas flow path to the recess 25 (for example, the second gas introduction passage 24 or the gas outlet ports 26) may be replaced with a conventional technique, such as the second conduit described in European Patent No. 31054043. The laser head assembly 12 may also be replaced with a conventional technique (for example, Japanese Patent Nos. 5147445, 6318428, and 5877432).

### Second Embodiment

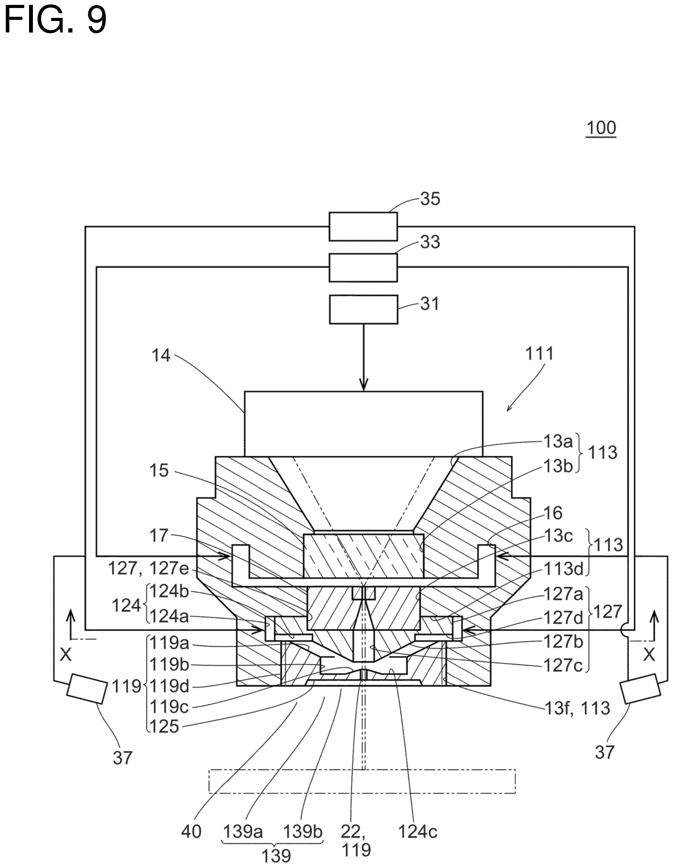

As shown in FIG. 9, a laser machining apparatus 100 according to the present embodiment includes a laser head 111 instead of the laser head 11 of the first embodiment. Other structural features of the laser machining apparatus 100 are substantially identical to those of the laser machining apparatus 10 of the first embodiment.

The laser head 111 includes a head body 113, the window 15, the nozzle 17, a nozzle cover 127, and a cap 119.

The head body 113 includes a cap chamber 113d instead of the cap chamber 13d. Other structural features of the head body 113 are substantially identical to those of the head body 13 in the first embodiment. The cap chamber 113d has a stepped cylindrical shape. The cap chamber 113d includes the female thread 13f.

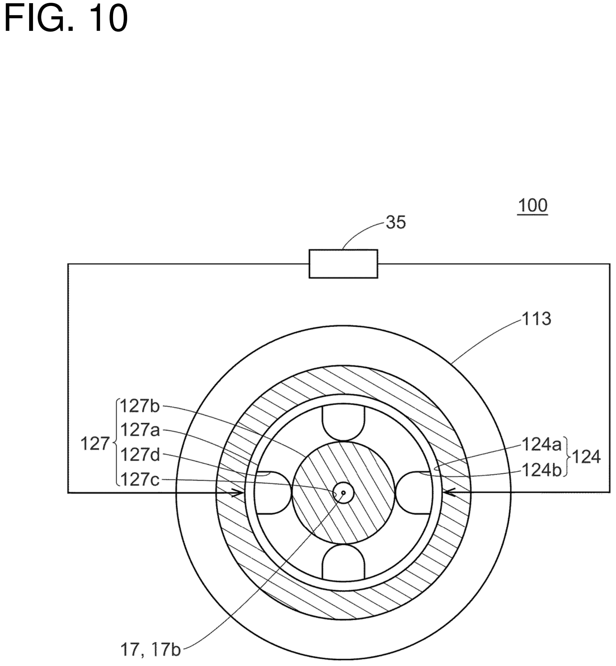

The nozzle cover 127 includes a flange 127a, a nozzle chamber 127e, a nozzle-side protrusion 127b, a liquid-column passage 127c, and gas grooves 127d. The flange 127a, which has a disk shape, abuts the proximal-end surface of the cap chamber 113d. The nozzle chamber 127e, which has a right cylindrical shape, is disposed at the proximal end of the flange 127a. The nozzle chamber 127e contacts the nozzle 17 at two surfaces: its cylindrical side surface and its bottom surface. The nozzle-side protrusion 127b is disposed on the distal side of the flange 127a. The nozzle-side protrusion 127b has the shape of a truncated cone centered on the central axis 1. The nozzle-side protrusion 127b has a diameter decreasing toward the distal end. The liquid-column passage 127c, which has a right cylindrical shape centered on the central axis 1, passes through the nozzle cover 127. As shown in FIG. 10, a plurality (four in the present embodiment) of gas grooves 127d are arranged rotationally symmetrically about the central axis 1. The gas grooves 127d are located on the distal surface of the flange 127a. Each gas groove 127d, which has a rectangular cross-section, extends radially. A radially inner end of each gas groove 127d may have a semicircular shape as viewed along the central axis 1.

The cap 119 includes an introduction chamber 119a, a swirl chamber (gas supply chamber) 119b, the liquid-column outlet 22, a cap protrusion 119c, a male thread 119d, and a recess 125. The cap 119 has a cylindrical shape. The introduction chamber 119a has a diameter that decreases toward the distal end. The introduction chamber 119a has the shape of a truncated cone centered on the central axis 1. A clearance is provided between the introduction chamber 119a and the nozzle-side protrusion 127b. The swirl chamber 119b has a cylindrical shape centered on the central axis 1. The swirl chamber 119b, which is disposed on the distal side of the introduction chamber 119a, is connected to the introduction chamber 119a. The cap protrusion 119c is disposed on a distal-end surface of the swirl chamber 119b. The cap protrusion 119c has the shape of a cylinder or a truncated cone centered on the central axis 1. The cap protrusion 119c has a diameter decreasing toward the proximal end. The liquid-column outlet 22 penetrates the cap 119. The liquid-column outlet 22 is located at the cap protrusion 119c. The recess 125 is located at the distal end of the cap 119. The recess 125 is substantially identical to the recess 25 in the first embodiment.

The cylindrical cap protrusion 119c and the liquid-column outlet 22 may be replaced with an introduction pipe. The cap protrusion 119c may also be omitted.

The gas introduction passage 124 includes a distribution chamber 124a and a connection passage 124b. The distribution chamber 124a is defined between the flange 127a and the cap chamber 113d. The distribution chamber 124a has a hollow cylindrical shape. The connection passage 124b is defined by the cap chamber 113d and the gas groove 127d. The connection passage 124b, which has a rectangular cross-section, extends radially. The connection passage 124b connects the introduction chamber 119a and the distribution chamber 124a.

Gas flows through the gas introduction passage 124 and the introduction chamber 119a, swirls within the swirl chamber 119b, and is discharged as a gas flow 43 from the liquid-column outlet 22. The gas flow 43 flows along the central axis 1 so as to envelop the liquid column 41.

### Third Embodiment

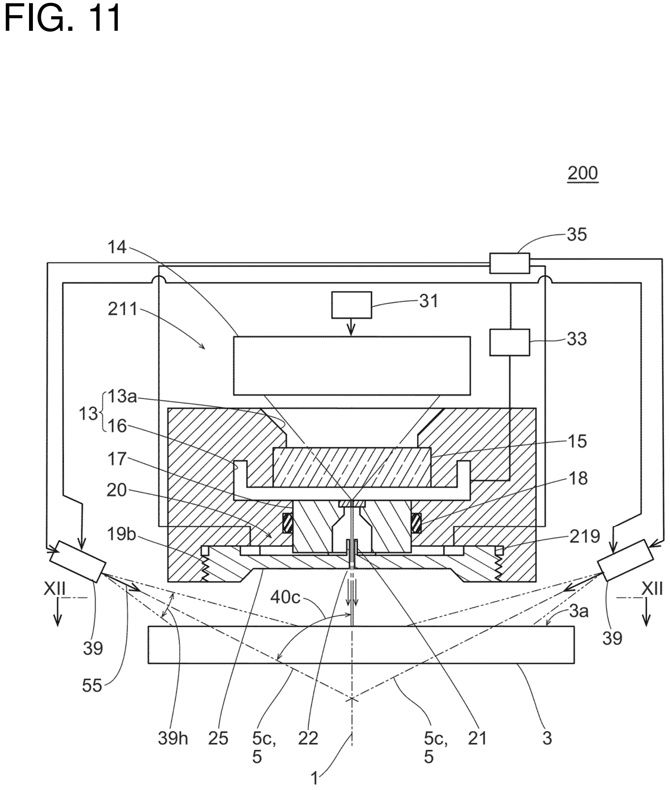

As shown in FIG. 11, a laser machining apparatus 200 according to the present embodiment includes a machining head 211 and a mist nozzle 39. The machining head 211 includes a cap 219 instead of the cap 19, and is otherwise substantially identical to the laser machining apparatus 10 of the first embodiment.

The cap 219 does not include the second gas introduction passage 24 and the gas outlet ports 26 of the first embodiment. Other structural features of the cap 219 are substantially identical to those of the cap 19 in the first embodiment.

The mist nozzle 39 sprays the mist 55 in a solid conical pattern centered on a spray axis 5c. As viewed from the machining head 211, the spray axis 5c intersects the central axis 1 on the rear side of the workpiece 3. An angle 40c between the spray axis 5c and the central axis 1 is, for example, 65° to 75°. A spray angle 39h of the mist nozzle 39 is, for example, 15° to 25°. The orientation of the mist nozzle 39 is adjusted so that the mist 55 does not collide with the machining head 211. The water flow rate of the mist 55 is 0.040 L/min to 0.150 L/min. The air flow rate of the mist 55 is 2 to 8 L/min per nozzle at atmospheric pressure and 25°C. Other structural features of the mist nozzle 39 are substantially identical to those of the mist nozzle 37 of the first embodiment.

According to the present embodiment, an appropriate liquid film is formed on the workpiece 3, suppressing sludge adhesion to the workpiece 3. As the influence on the liquid column 41 is small, machining performance does not significantly deteriorate.

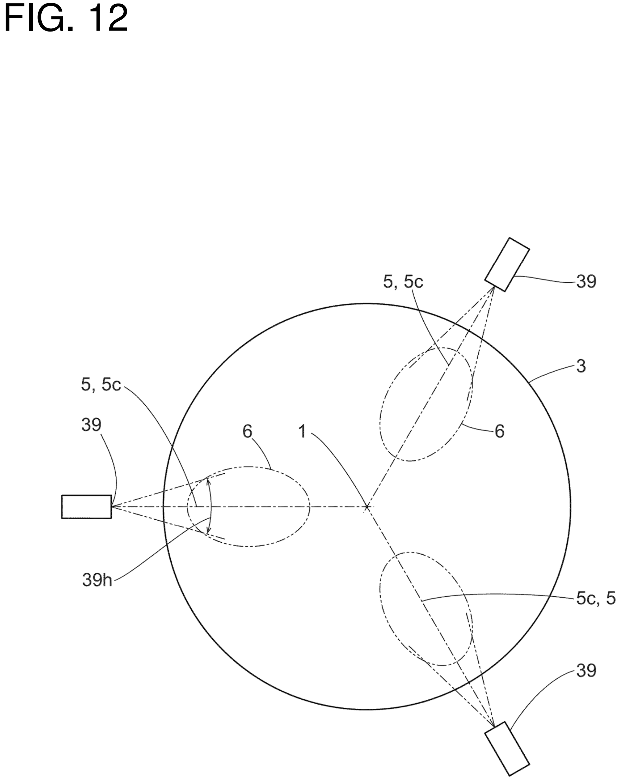

The laser machining apparatus 200 includes one or more mist nozzles 39. Preferably, the laser machining apparatus 200 includes a plurality (three in the present embodiment) of mist nozzles 39. The plurality of mist nozzles 39 are arranged rotationally symmetrically about the central axis 1. As shown in FIG. 12, the region 6 in which the mist 55 collides with the workpiece 3 is located away from the central axis 1.

When the air flow rate is low, machining performance deteriorates. It is believed that this is because the droplets of the mist 55 become larger, and water adhering to the machining head 211 disturbs the jet. When the air flow rate is high, the influence on machining performance is small. In this case, as the water film on the workpiece 3 is blown away, sludge adhesion to the workpiece 3 is not significantly suppressed.

When the water flow rate is large, the liquid film formed on the workpiece 3 tends to become thicker. In such cases, laser light is more likely to scatter, and machining performance tends to deteriorate. When the water flow rate is small, formation of a liquid film on the workpiece 3 is suppressed. Accordingly, the effect of suppressing sludge adhesion to the workpiece 3 tends to decrease.

When the angle 38c is large, water tends to adhere to the machining head 211. This tends to deteriorate machining performance. When the angle 38c is small, water is less likely to adhere to the machining head 211, and the influence on machining performance is small. However, the amount of water adhering to the workpiece 3 decreases, and formation of a liquid film on the workpiece 3 is suppressed. This tends to decrease the effect of suppressing sludge adhesion to the workpiece 3.

When the number of mist nozzles 39 is small, the thickness of the liquid film on the workpiece 3 may vary. As a result, the amount of sludge adhering to the workpiece 3 is likely to fluctuate. By providing a plurality of mist nozzles 39, the thickness of the liquid film on the workpiece 3 tends to become more uniform. this reduces variation in the amount of sludge adhering to the workpiece 3.

### Modified Example

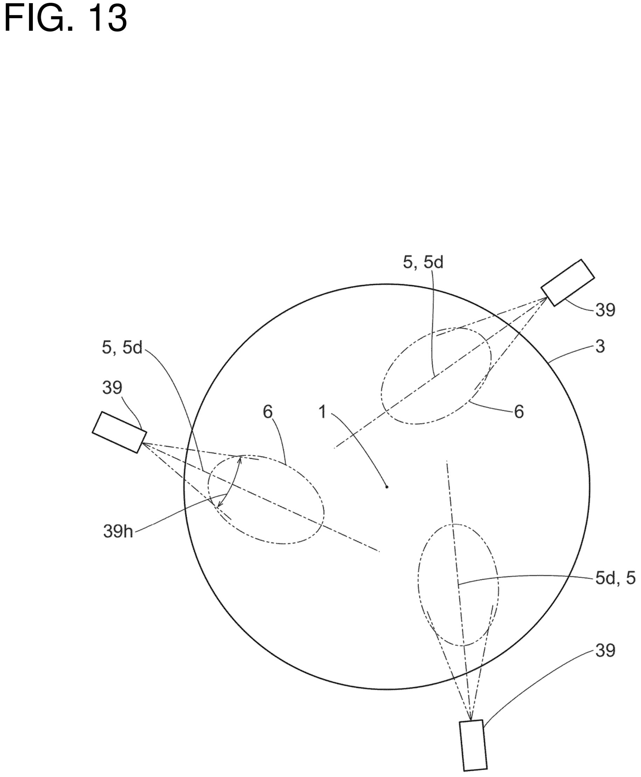

As shown in FIG. 13, the spray axis 5d may be modified so as to be in a skewed positional relationship (non-intersecting) with the central axis 1. In this case, the spray axis 5d does not intersect the central axis 1. Even in this configuration, the mist nozzles 39 are arranged rotationally symmetrically about the central axis 1. The spray axes 5d are likewise arranged rotationally symmetrically about the central axis 1.

According to this modified example, the mist 55 does not collide with the liquid column 41. This reduces disturbance of the liquid column 41. This also prevents deterioration of machining performance. Furthermore, a liquid film can be formed on the upper surface of the workpiece 3. This suppresses sludge adhesion to the workpiece 3.

The present invention is not limited to the embodiments described above, and various modifications may be made without departing from the spirit and scope of the invention. All technical matters included within the scope of the claims are encompassed by the present invention. Although the embodiments described above illustrate preferred examples, those skilled in the art will readily understand that alternative forms, modifications, variations, and improvements may be made based on the disclosures herein, and such variations fall within the technical scope defined by the appended claims.

### Reference Signs List

10, 100, 200 Laser machining apparatus
11, 111, 211 Laser head
14 Optical lens
16 Liquid supply chamber
17 Nozzle
17b Orifice
17c Liquid-column forming chamber
20 First gas introduction passage (gas introduction passage)
21 Outlet tube
22 Liquid-column outlet
37, 39 Mist nozzle

## Claims

1. A laser machining apparatus (10, 100, 200) for machining a workpiece (3), the laser machining apparatus (10, 100, 200) comprising:
a laser head (11, 111, 211) including:
a liquid supply chamber (16) configured to store a liquid,
a liquid nozzle (17) disposed to face the liquid supply chamber (16), the liquid nozzle (17) having an orifice (17b) configured to generate a liquid column (41),
an optical lens (14) configured to focus a laser beam onto the orifice (17b), and
a liquid-column outlet (22) configured to allow the liquid column (41) to pass; and
a mist nozzle (37, 39) disposed on a distal side of the laser head (11, 111, 211), the mist nozzle (37, 39) configured to spray mist (55) toward the workpiece (3).

2. The laser machining apparatus (10, 100, 200) according to claim 1,
wherein the mist nozzle (37, 39) includes:
a mist outlet (37e),
a mixing chamber (37d) connected to the mist outlet (37e),
a gas outlet (37f) located at the mixing chamber (37d), the gas outlet (37f) configured to inject gas along a spray axis (5) that passes through the mist outlet (37e), and
a liquid inlet (37g) located at the mixing chamber (37d), the liquid inlet (37g) configured to inject the liquid into the mixing chamber (37d) from a lateral direction relative to the spray axis (5).

3. The laser machining apparatus (10, 100, 200) according to claim 1 or 2, wherein
the mist nozzle (37, 39) sprays the mist (55) toward a vicinity of a machining point at which the liquid column (41) collides with the workpiece (3).

4. The laser machining apparatus (10, 100, 200) according to any one of claims 1 to 3, wherein
a spray axis (5) of the mist nozzle (37, 39) intersects the liquid column (41).

5. The laser machining apparatus (10, 100) according to any one of claims 1 to 4, further comprising:
a plurality of the mist nozzles (37a, 37b) arranged asymmetrically with respect to the liquid column (41).

6. The laser machining apparatus (10, 100, 200) according to any one of claims 1 to 5, wherein
the mist nozzle (37, 39) continuously sprays the mist (55).

7. The laser machining apparatus (10, 100, 200) according to any one of claims 1 to 6, wherein
the mist nozzle (37, 39) sprays the mist (55) in a planar pattern or a conical pattern.

8. The laser machining apparatus (10, 100, 200) according to any one of claims 1 to 7, wherein
the laser head (11, 111) includes a gas supply chamber (20c, 119b) disposed at a distal end of the liquid nozzle (17) and connected to the liquid-column outlet (22), and
the liquid-column outlet (22) discharges gas supplied to the gas supply chamber (20c, 119b).

9. The laser machining apparatus (200) according to claim 1 or 2, wherein
the mist nozzle (39) is disposed radially outward of the laser head (11) with respect to the liquid column (41), and sprays the mist (55) toward a location spaced from a machining point at which the liquid column (41) collides with the workpiece (3).

10. The laser machining apparatus (200) according to claim 9, further comprising:
a plurality of the mist nozzles (39) disposed symmetrically with respect to the liquid column (41).

11. The laser machining apparatus (200) according to claim 9 or 10, wherein
a spray axis (5c) of the mist nozzle (39) intersects the liquid column (41) at a single location on a rear side of the workpiece (3) relative to the laser head (11).

12. The laser machining apparatus (200) according to claim 9 or 10, wherein a spray axis (5d) of the mist nozzle (39) does not intersect the liquid column (41).

13. The laser machining apparatus (200) according to any one of claims 9 to 12, wherein
the mist nozzle (39) sprays the mist (55) in a planar pattern or a conical pattern.

14. The laser machining apparatus (10, 100, 200) according to any one of claims 1 to 13, wherein
a flow rate of the gas per mist nozzle (37, 39) is 2 to 8 L/min.

15. The laser machining apparatus (10, 100, 200) according to any one of claims 1 to 14, wherein
a flow rate of the liquid per mist nozzle (37, 39) is 0.040 to 0.150 L/min.
